# NEW EUROPEAN PATENT SPECIFICATION

(11) **EP 0 382 673 B2**
(45) Date of publication and mention of the opposition decision: **06.03.1996**
(45) Mention of the grant of the patent: 14.04.1993
(21) Application number: 90610010.2
(22) Date of filing: 06.02.1990
(51) Int. Cl.: F23G 5/20, F23G 5/02, F23G 5/027, C04B 7/24

(54) **Method and apparatus for cofiring hazardous waste in industrial rotary kilns**
Verfahren und Vorrichtung zur Mitverbrennung von Sonderabfall in industriellen Drehrohröfen
Procédé et dispositif de combustion simultanée des déchets dangereux dans des fours rotatifs industriels

(30) Priority: 07.02.1989 US 307631
(43) Date of publication of application: 16.08.1990
(73) Proprietor: F.L. Smidth & Co. A/S, DK-2500 Valby, Copenhagen (DK)
(72) Inventor: Enkegaard, Torben, c/o F.L. Smidth & Co. A/S, DK-2500 Valby (DK)
(74) Representative: Lomholt, Lars A.

(56) References cited:
- EP-A- 0 124 038
- WO-A-87/02119
- CH-A- 194 402
- DE-A- 2 637 330
- DE-A- 3 524 316
- DE-A- 3 542 004
- DE-B- 2 338 318
- DE-C- 2 624 971
- US-A- 4 850 290
- REVUE GENERALE DE THERMIQUE. vol. 26, no. 303, March 1987, PARIS FR pages 203 - 209; Derousseau and Etoc: "Filière cimentière de destruction des déchets"
- Proceedings of the 30th IEEE Cement Industry Technical Conference, Quebec, Canada, 24-26 May 1988. 1988, IEEE, New York Pages 427-447 N. Ingebrigtsen & J.Haugom "Waste Firing in Cement Kilns"
- "Planung von Abfallbehandlungsanlagen" by K.J.Thomé-Kosmiensky, 1985, pp. 521 to 525

## Description

Growing environmental concern makes it more and more difficult to dispose of hazardous waste in direct landfilling, by storage in surface impoundments, by deep well injection, by dumping or by simple burning off at sea.

It is therefore expected that in the future, incineration or thermal oxidation at high temperature will play an increasing role as an environmentally acceptable way of destroying hazardous organic waste.

Incineration is an engineered process that employs thermal decomposition via thermal oxidation at high temperature (normally 900°C/1650°F or greater) to destroy the organic fraction of waste and reduce volume. Generally, combustible wastes or wastes with high organic content are considered most appropriate for incineration. However, technically speaking, any waste with a hazardous organic fraction, no matter how small, is at least a functional candidate for incineration. For instance, significant amounts of contaminated water are currently incinerated in the United States. Contaminated soils are also being incinerated with increasing frequency.

The minimum temperature required for incineration ranges from 875°C/1610°F for incineration of municipal garbage, to 1400°C/2550°F for the incineration of the most stable organic components such as PCB, dioxin, DDT and residues from the production of polyvinyl halogenides. The residence time at the high temperature should be at least 2 seconds.

A separate technology, that of producing cement clinker in cement kilns, such as rotary kilns, also involves high temperature burning. Liquid wastes have in the past been burned in cement kilns without any substantial technical problems because liquid waste can be fired using conventional oil burners similar to fuel oil burners.

In this regard, the incinerating of liquid contaminants in cement kilns has been as much for the purpose of obtaining inexpensive fuel for the kiln. Thus a cement kiln operator may be willing to actually pay for contaminated oil or the like.

The burning of liquid organic hazardous wastes allows for the recovery of substantial amounts of energy from waste materials. The production of cement is a highly energy intensive process. Energy costs generally account for 33 to 40 percent of the cost of producing clinker. Waste fuels typically have a heat content comparable to coal. By injecting liquid organic wastes into the kiln as a supplemental fuel, cement kilns may greatly reduce their use of primary fuels, thus providing substantial savings to the manufacturer.

Most of the rotary kilns burning liquid waste are wet process kiln. The reason is presumably that wet process kilns are particularly fuel inefficient, for which reason operators of wet kilns have been strongly motivated to find ways to lower their fuel bill. Another reason is that wet kilns can accept high inputs of chloride without expensive modifications (up to 0.8% Cl on clinker basis), whereas dry process kilns with 4-stage preheaters are limited to a chloride input of 0.015% (precalciner kilns) to 0.023% (preheater kilns) on clinker basis. If the chloride input exceeds these figures, the kilns will have to be equipped with costly by-pass installations which in the most extreme case (a precalciner kiln with 100% by-pass for kiln exit gas) will permit a total chloride input of about 0.8% Cl on clinker basis.

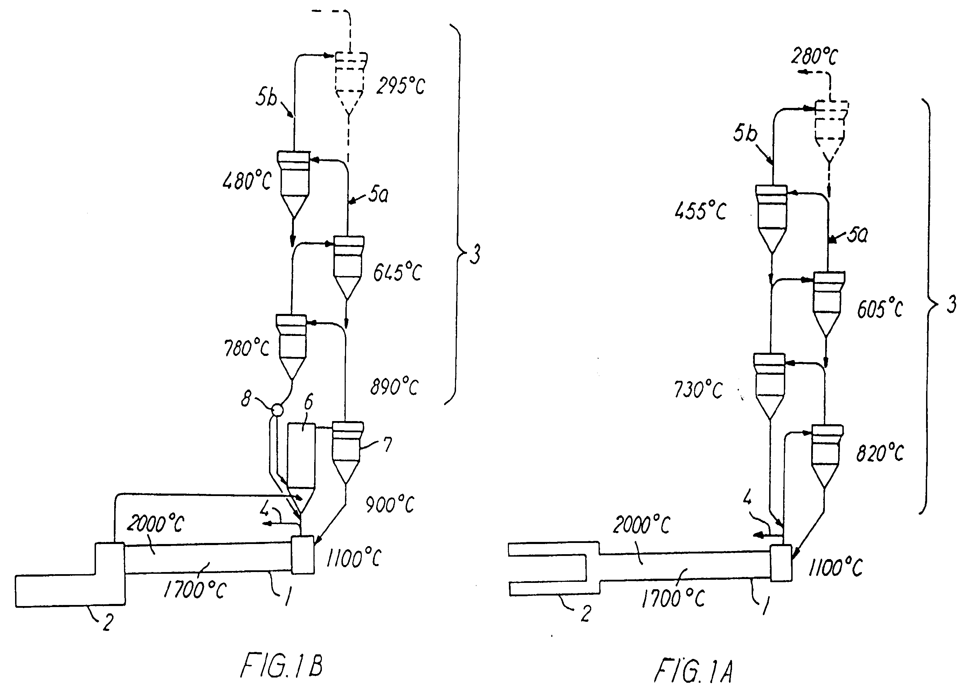

The gas exit temperature from a rotary kiln typically is about 1100°C, which, however, drops to 820°C (preheater kilns) or 900°C (precalciner kilns) a few tenths of a second after the gas leaves the rotary kiln at its material inlet end (see figs. 1A and B) when raw material is introduced here into the stream of kiln gas. The gas taken out through the by-pass is quenched with cold air to even lower temperatures to permit the handling of the by-pass gas.

For this reason it is not possible to introduce chlorinated waste into the material inlet end of preheater kilns, or to fire it into a precalciner since a temperature of at least 1200°C at 2 seconds gas retention time is required. Non-chlorinated solvents (as for instance turpentine, xylenole, etc.) may therefore be burned in precalciners or introduced into the material inlet end of preheater kilns without problems.

Cement rotary kilns have, however, the potential to dispose of large volumes of organic waste. For example, by replacing 35 percent of its coal consumption by burning waste fuels, a typical cement kiln could burn on the order of 100 tons of hazardous wastes per day. Such substitution rates have been achieved with liquid organic waste.

When solid or semi-solid residues are concerned, waste producers may be required to pay ransom amounts to have the residues removed and destroyed in an environmentally acceptable manor. The lack of an available effective and low cost means of disposing of such wastes has thus often resulted not only in high removal and treatment costs, but in unsafe or illegal dumping with almost incalculable damage to the environment, and steps have been taken to solve this problem in a more cost-effective way. Thus, incineration of hazardous organic waste material in solid, pasty, greasy or sludge form, is for example known from DE-A-3542 004 according to which waste is introduced directly into the burning zone of a rotary kiln and simultaneously burnt together with the treated product, such as cement, so as to form a clinker product, and the clinker product is then removed from the kiln.

In comparison to other types of hazardous waste incinerators, rotary kilns possess several characteristics which make them represent an efficient technology for destroying highly toxic and stable organic wastes. These characteristics include the following:
(a) Combustion gas temperatures and residence times in cement kilns exceed those generally experienced in commmercial hazardous waste incinerators. These high combustion temperatures and long residence times, along with the strong turbulence encountered in cement kilns, virtually assure the complete destruction of even the most stable organic compounds.
(b) Due to the large size and the amount of heated material in cement kilns, these rotary kilns exhibit high thermal stability. In other words, temperatures within the kiln change very slowly. Thus, even if a cement kiln is forced into an emergency shutdown resulting from a loss of primary fuel or severe upset, all hazardous waste in the kiln should be completely destroyed, provided that automatic cutoffs prevent further injection of wastes.
(c) Cement kilns operate under alkaline conditions. Therefore, virtually all of the chlorine entering the kiln is neutralized to form calcium chloride, sodium chloride and potassium chloride, all relatively nontoxic substances. Consequently, emissions of hydrogen chloride, a strongly acidic compound, are significantly lower than emissions from hitherto commercial hazardous waste incinerators.
(d) Bottom ash resulting from the incineration process is incorporated into the clinker product, eliminating bottom ash disposal problems. Any metals contained in bottom ash are incorporated into the cement product in an inert form. Furthermore, cement quality is relatively insensitive to the addition of most impurities found in hazardous wastes and waste oils.

In order to burn chlorinated waste in a cement rotary kiln, it must be introduced at a place where sufficient temperature and retention time can be secured. The only such place is the burning zone of the kiln.

In operation all cement rotary kilns have a coating of clinker on the internal refractory bricks or lining in the burning zone which usually extends six kiln diameters from the clinker outlet. In the burning zone the flame temperature is about 2000°C (3600°F) and at the upstream (from a material standpoint) end of the coating the gas temperature is about 1700°C and may be as high as about 1800°C (3270°F).

About two kiln diameters further up in the rotary kiln there will be little or no coating of clinker on the refractory bricks, and the gas temperature here will still be 1600-1700°C (2910-3090°F). This has been found to be an ideal place to introduce solid or semi-solid waste. For example, such waste could be introduced into this part of the burning zone in steel drums since there would here be sufficient temperature and time to destroy even the more difficult chlorinated waste and to burn the drums completely to iron oxide.

It is therefore the object of the present invention to provide a method and an apparatus for introducing solid or semi-solid waste directly into the burning zone of a rotary kiln.

The object is obtained by means of a method as described in the preamble of claim 1 and characterized by the features mentioned in the characterizing part of this daim.

The object is further obtained by means of an apparatus as mentioned in claim 2.

For a better understanding of the invention, reference may be made to the following description of an exemplified embodiment taken in conjunction with the figures of the accompanying drawings, in which:

Figure 1A is a schematic view of a typical suspension preheater cement rotary kiln system showing the various temperature zones contained therein.

Figure 1B is a schematic view of a typical precalciner cement rotary kiln system, also showing the various temperature zones.

Figure 2 is a schematic view of a ballistic launcher which can be fitted to either the material inlet end or the firing end of the kiln types shown in Figures 1A and 1B.

The surprising new according to the present invention is thus the use of a device for shooting whole drums or smaller canisters filled with solid/semi-solid waste into the burning zone of the kiln. Technically it is possible to shoot 200 litres (55 gallon) drums into the kiln, but heat value andlor combustion rate of the waste may not correspond with such large doses in which case smaller canisters have to be used. Awaste generator may then preferably have to pack the waste in such special containers if repacking at the cement plant is to be avoided.

In Figures 1A and 1B 1 is a rotary kiln, 2 a material cooler coupled after the kiln, 3 a multistage cyclone preheater, 4 a kiln exit gas by-pass, 5a and 5b raw material inlets in the preheater, 6 a precalciner, 7 a separator cyclone for precalcined raw material and 8 (Fig. 1B) a splitting valve for feeding raw material to the precalciner 6. As to these Figures, and as noted above, the rotary kiln 1 typically has a gas exit temperature of about 1100°C. Downstream (from a raw material standpoint) of the gas exit the temperature is substantially higher, e.g., 2000°C in the burning zone and 1700°C or higher at the upstream end of the zone of the coating of clinker on the refractory bricks or lining. In order to destroy the waste according to the invention, it is preferred that a gas temperature of a least 1500°C is maintained in the burning zone.

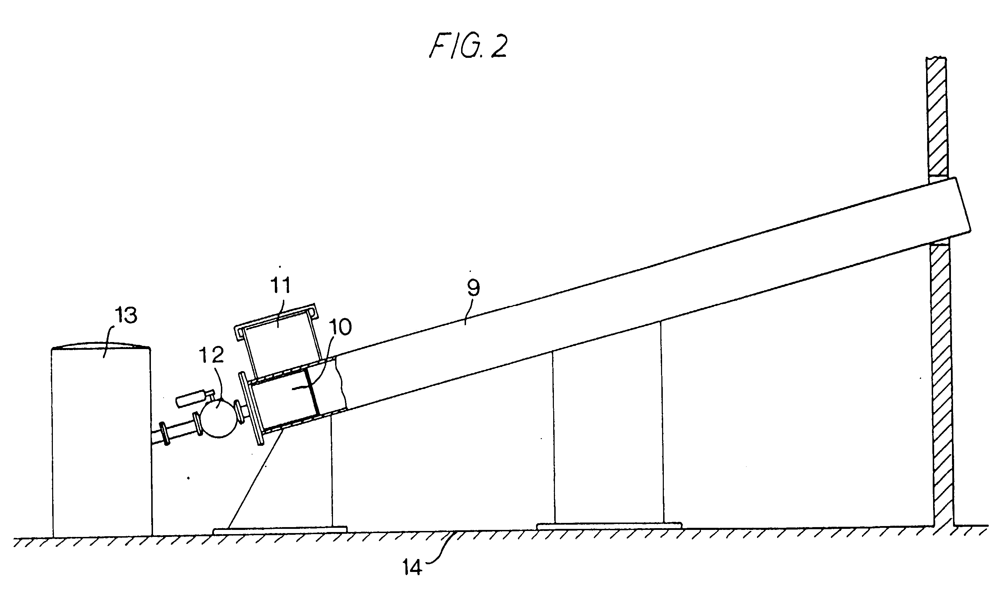

Fig. 2 outlines the principle of a pneumatic gun for shooting canisters into the burning zone of a rotary kiln (not shown in this figure). The gun comprises a barrel 9 and a loading arrangement 11 through which canisters 10 with waste are placed in the barrel. The canisters can either be placed directly in the barrel 9 or in a sledge (not shown) with an open front. The propellant for the gun may be compressed air from a compressed air plant 13 and the charge in the barrel is propelled out through the barrel by quickly opening a valve 12. If a sledge is used there will be a sledge brake near the muzzle of the barrel. The pnematic gun device is typically placed on the burner's platform 14 at the firing end of a rotary kiln with a suitable elevation of the barrel. The canisters will ballistically be thrown into the kiln through an opening in the lower part of the kiln hood. The gun device may also be a purely mechanical catapult, an electromechanical device or be based upon a combination of electric, pneumatic and mechanical principles.

## Claims

1. A method for destroying hazardous organic waste material in solid, pasty, greasy or sludge form by incineration and where the waste is introduced directly into the burning zone of a rotary kiln, simultaneously burned together with the treated product such as cement, lime or lightweight aggregate in the kiln at a gas temperature of at least 1500°C in the burning zone of same so as to form an environmentally acceptable clinker product, and remove the clinker product from the kiln, **characterized** in using a gun device for introducing the waste encapsulated in canisters such as steel drums ballistically through the firing end or the raw material inlet end of the kiln with sufficient velocity as to cause the waste to be introduced directly into and not substantially beyond said burning zone.

2. Apparatus for incinerating hazardous organic waste material in solid, pasty, greasy or sludge form in a cement rotary kiln (1) having an upper raw material inlet end, a lower firing end, a high temperature burning zone located within the kiln between the upper inlet end and the firing end, the buring zone adapted to be maintained at an operating gas temperature of at least 1500°C, and having means for introducing said hazardous waste material directly into the burning zone, **characterized** in that the means comprise a gun device using compressed air as a propellant (9,10,11,12) at either the raw material inlet end or the firing end of the kiln (1) capable of imparting sufficent velocity to the waste encapsulated in canisters so as to cause the waste to be carried along a ballistic trajectory directly into the burning zone.

## Patentansprüche

1. Verfahren zur Vernichtung von gefährlichem organischen Abfallmaterial in fester, pastöser, schmieriger oder Schlammform durch Veraschung, wobei der Abfall direkt in die Brennzone eines Drehofens eingeführt, zusammen mit dem behandelten Produkt, wie beispielsweise Zement, Kalk oder Leichtzuschlagstoff, in dem Ofen bei einer Gastemperatur von mindestens 1.500°C in der Brennzone desselben gleichzeitig gebrannt wird, um ein umweltakzeptables Klinkerprodukt zu bilden und das Klinkerprodukt aus dem Ofen zu entfernen, **gekennzeichnet durch** verwendung einer Kanoneneinrichtung für ballistisches Einführen des in Kanister, wie beispielsweise Stahlfässer, eingebrachten Abfalls durch das Befeuerungsende oder das Rohmaterial-Einlassende des Ofens mit ausreichender Geschwindigkeit, damit der einzuführende Abfall direkt in und nicht wesentlich hinter der Brennzone eingeführt wird.

2. Vorrichtung zur Veraschung von gefährlichem organischen Abfallmaterial in fester, pastöser, schmieriger oder Schlammform in einem Zementdrehofen (1) mit einem oberen Rohmaterial-Einlassende, einem unteren Befeuerungsende, einer Hochtemperatur-Brennzone, die innerhalb des Ofens zwischen dem oberen Einlassende und dem Befeuerungsende angeordnet ist, wobein die Brennzone zur Aufrechterhaltung einer Betriebs-Gastemperatur von mindestens 1.500°C geeignet ist, und mit Mitteln zur Einführung des gefährlichen Abfallmaterials direkt in die Brennzone, **dadurch gekennzeichnet**, dass die Mittel ein Druckluft als Vortriebsmittel verwendende Kanoneneinrichtung (9, 10, 11, 12) an dem Rohmaterial-Einlassende oder dem Befeuerungsende des Ofens (1) umfassen, welche Einrichtung in der Lage ist, dem in Kanister eingebrachtem Abfall eine ausreichende Geschwindigkeit zu verleihen, damit er entlang eine ballistische Trajektorie direkt in die Brennzone transportiert wird.

## Revendications

1. Procédé de destruction de déchets organiques dangereux sous forme solide, pâteuse, graisseuse ou de boues par incinération, les déchets étant introduits directement dans la zone de combustion d'un four rotatif, et brulant simultanémment avec le produit traité, tel que le ciment, la chaux ou un agrégat léger, dans le four à une température du gaz d'au moins 1.500°C dans la zone de combustion, afin que le clinker produit soit acceptable pour l'environnement, avec extraction du clinker produit du four, caractérisé par l'utilisation d'un canon pour l'introduction ballistique des déchets encapsulés dans des barils, tels que des fûts d'acier, par l'extrémité d'allumage ou l'extrémité d'entrée des matieères premières du four avec une vitesse suffisante pour que les déchets soient introduits directement dans la zone de combustion et pratiquement pas au-delà de cette zone.

2. Appareil d'incinération de déchets organiques dangereux sous forme solide, pâteuse, graisseuse ou de boues, dans un four rotatif (1) de ciment, ayant une extrémité supérieure d'entrée de matières premières, une extrémité inférieure d'allumage, une zone de combustion à température élevée placée dans le four entre l'extrémité supérieure d'entrée et l'extrémité d'allumage, la zone de combustion étant destinée à être maintenue à une température de fonctionnement du gaz d'au moins 1.500°C, et comprenant un dispositif d'introduction de déchets dangereux directement dans la zone de combustion, caractérisé en ce que le dispositif comprenant un canon (9,10,11,12) utilisant comme propulseur de l'air comprimé placé à l'extrémité d'entrée des matières premières ou à l'extrémité d'allumage du four (1) est capable de donner une vitesse suffisante aus déchets encapsulés dans les barils pour qu'ils soient transportés ballistiquement suivant une trajectoire directement dans la zone de combustion.
